# EUROPEAN PATENT APPLICATION

(11) **EP 4 589 818 A1**
(43) Date of publication of application: **23.07.2025**
(21) Application number: 23865263.0
(22) Date of filing: 29.08.2023
(51) Int. Cl.: H02K 3/18, H02K 3/04, H02K 3/28, H02K 3/52

(54) **STATOR**

(30) Priority: 15.09.2022 JP 2022147354
(71) Applicant: DENSO CORPORATION, Kariya-city, Aichi 448-8661 (JP)
(72) Inventor: YAMASHITA, Yuji, Kariya- city, Aichi 4488661 (JP); KATO, Hidenori, Kariya- city, Aichi 4488661 (JP)
(74) Representative: Kuhnen & Wacker Patent- und Rechtsanwaltsbüro PartG mbB
(86) International application number: PCT/JP2023/031114
(87) International publication number: WO 2024/057906

(57) **Abstract**

A stator (30) includes a stator core (31) and a plurality of stator windings (32). The stator core includes: a back yoke (33) that is shaped in a circular ring form; and a plurality of teeth (34). The plurality of stator windings (32) include a plurality of phase windings, each of which is provided for a corresponding one of a plurality of phases. Each of the plurality of phase windings has a plurality of winding segments each of which is wound around a corresponding one of the plurality of teeth using concentrated winding. Among the plurality of teeth, a first tooth, a second tooth and a third tooth, which are consecutively arranged in the circumferential direction, are wound with a first phase winding (C1) and a second phase winding (C2) among the plurality of phase windings such that two of the plurality of winding segments of the first phase winding are wound continuously around the first tooth and the second tooth, respectively, and two of the plurality of winding segments of the second phase winding are wound continuously around the second tooth and the third tooth, respectively. One end portion of the first phase winding is pulled out from a proximal end portion or a distal end portion of the first tooth, and another end portion of the first phase winding is pulled out from a proximal end portion or a distal end portion of the second tooth. One end portion of the second phase winding is pulled out from a proximal end portion or a distal end portion of the third tooth, and another end portion of the second phase winding is pulled out from the proximal end portion or the distal end portion of the second tooth.

## Description

### CROSS REFERENCE TO RELATED APPLICATION

This application is based on and incorporates herein by reference Japanese Patent Application No. 2022-147354 filed on September 15, 2022.

### TECHNICAL FIELD

The present disclosure relates to a stator.

### BACKGROUND ART

In a rotary electric machine, which includes a stator and a rotor, in order to reduce a ripple electric current in stator windings provided on the stator, it is conceivable to wind two phase windings of different phases on each set of three teeth consecutively arranged in the circumferential direction among a plurality of teeth of the stator. For example, the patent literature 1 describes a technology for a rotary electric machine having stator windings of three-phases, i.e., a U-phase, a V-phase and a W-phase. In this rotary electric machine, coil bodies Ua, Va, Wa of the U-phase, the V-phase and the W-phase of a first set of stator windings are wound around a plurality of first teeth, respectively, and coil bodies Ub, Vb, Wb of the U-phase, the V-phase and the W-phase of a second set of stator windings are wound around a plurality of second teeth, respectively. Furthermore, coil bodies Uc, Vc, Wc of the U-phase, the V-phase and the W-phase of the first set of stator windings and coil bodies Uc, Vc, Wc of the U-phase, the V-phase and the W-phase of the second set of stator windings are wound around a plurality of third teeth, respectively. In this rotary electric machine, a phase difference between a magnetomotive force of each coil body of the corresponding phase and a magnetomotive force of the corresponding coil body of the corresponding phase falls within a predetermined phase range that includes 20 degrees in electrical angle.

### CITATION LIST

### PATENT LITERATURE

PATENT LITERATURE 1: JP7103299B2

### SUMMARY OF INVENTION

However, in the patent literature 1, there is no description about a specific winding configuration for winding the phase windings of two different phases on the three teeth which are consecutively arranged in the circumferential direction. Therefore, it is desirable to have a technique for winding the phase windings of the two different phases on the three teeth which are consecutively arranged in the circumferential direction.

The present disclosure has been made in view of the above issues, and it is an objective of the present disclosure to provide a stator that can optimally wind phase windings of two phases on three teeth which are consecutively arranged in a circumferential direction.

Hereinafter, there will be described measures for achieving the above objective and actions and advantages thereof.

According to measure 1, there is provided a stator including:
a stator core that includes:
   a back yoke that is shaped in a circular ring form; and
   a plurality of teeth that radially extend from the back yoke and are arranged at predetermined intervals in a circumferential direction; and
a plurality of stator windings that include a plurality of phase windings, each of which is provided for a corresponding one of a plurality of phases, wherein:
   each of the plurality of phase windings has a plurality of winding segments each of which is wound around a corresponding one of the plurality of teeth using concentrated winding;
   among the plurality of teeth, a first tooth, a second tooth and a third tooth, which are consecutively arranged in the circumferential direction, are wound with a first phase winding and a second phase winding among the plurality of phase windings such that two of the plurality of winding segments of the first phase winding are wound continuously around the first tooth and the second tooth, respectively, and two of the plurality of winding segments of the second phase winding are wound continuously around the second tooth and the third tooth, respectively;
   one end portion of the first phase winding is pulled out from a proximal end portion or a distal end portion of the first tooth, and another end portion of the first phase winding is pulled out from a proximal end portion or a distal end portion of the second tooth; and
   one end portion of the second phase winding is pulled out from a proximal end portion or a distal end portion of the third tooth, and another end portion of the second phase winding is pulled out from the proximal end portion or the distal end portion of the second tooth.

For example, in order to reduce the ripple electric current in the stator, it is conceivable to wind two phase windings of different phases (the first phase winding and the second phase winding) on three teeth consecutively arranged in the circumferential direction. Specifically, in the stator core, it is conceivable to continuously wind the winding segments of the first phase winding around the first tooth and the second tooth, respectively, among the first to third teeth consecutively arranged in the circumferential direction, and to continuously wind the winding segments of the second phase winding around the second tooth and the third teeth, respectively. In such a configuration, the one end portion of the first phase winding is pulled out from the proximal end portion or the distal end portion of the first tooth, and the another end portion of the first phase winding is pulled out from the proximal end portion or the distal end of the second tooth. Also, the one end portion of the second phase winding is pulled out from the proximal end portion or the distal end portion of the third tooth, and the another end portion of the second phase winding is pulled out from the proximal end portion or the distal end portion of the second tooth. This allows for the optimal implementation of connecting the conductor wire end portions of each phase winding to the power source and the neutral point while grouping the three teeth together as one set. As a result, it is possible to optimally wind the phase windings of the two phases on the three teeth consecutively arranged in the circumferential direction.

According to measure 2, among the first phase winding and the second phase winding, the second phase winding is a pre-wound winding, which is wound first at a time of winding the first phase winding and the second phase winding, and the first phase winding is a post-wound winding, which is wound later after the pre-wound winding; and a tooth-to-tooth guide portion is placed at one of two opposite axial end portions of the stator core on a radially outer side or a radially inner side of a corresponding one or more of the plurality of teeth and is configured to guide a link portion of the pre-wound winding which spans between the second tooth and the third tooth.

In the case where the second tooth centered among the three teeth (first to third teeth) consecutively arranged in the circumferential direction is used as the common tooth, and the two phase windings (the first phase winding and second phase winding) are wound around this common tooth, there is a concern that the link portion of the pre-wound winding between the teeth may obstruct the winding of the post-wound winding around the second tooth. In this regard, since the tooth-to-tooth guide portion for guiding the link portion of the pre-wound winding is provided at the axial end portion of the stator core on the radially outer side or the radially inner side of the corresponding tooth, it is possible to limit the inconvenience of the link portion of the pre-wound winding between the teeth obstructing the winding of the post-wound winding.

According to measure 3, at least one electrical insulation member is placed on at least one of the two opposite axial end portions of the stator core and is configured to electrically insulate between one or more of the plurality of teeth and one or more of the plurality of winding segments of the plurality of phase windings; and the at least one electrical insulation member has at least one rising portion that axially extends and is placed on at least one of a proximal end side and a distal end side of an adjacent one or more of the plurality of teeth adjacent to the at least one rising portion, wherein the at least one rising portion functions as the tooth-to-tooth guide portion, and the link portion spans on an opposite side of the at least one rising portion opposite to the adjacent one or more of the plurality of teeth.

The at least one electrical insulation member is placed on at least one of the two opposite axial end portions of the stator core and is configured to electrically insulate between the one or more of the plurality of teeth and the one or more of the plurality of winding segments of the plurality of phase windings. The at least one electrical insulation member guides the link portion of the pre-wound winding between the teeth. With the at least one electrical insulation member, it is possible to achieve the electrical insulation between the one or more of the plurality of teeth and the one or more of the plurality of winding segments of the plurality of phase windings while optimally guiding the link portion between the teeth.

According to measure 4, the winding segment of the pre-wound winding wound around the second tooth and the winding segment of the pre-wound winding wound around the third tooth are coupled to one side part and another side part, respectively, of the link portion guided by the tooth-to-tooth guide portion, and a winding direction of a conductor wire segment of the winding segment of the pre-wound winding wound around the second tooth and a winding direction of a conductor wire segment of the winding segment of the pre-wound winding wound around the third tooth are opposite to each other.

In the case where the winding direction of the conductor wire segment of the winding segment of the pre-wound winding wound around the second tooth and the winding direction of the conductor wire segment of the winding segment of the pre-wound winding wound around the third tooth are opposite to each other, it is thought that loosening of the conductor wire at the link portion is more likely to occur compared to a case where these winding directions are the same. Additionally, when the loosening of the conductor wire occurs at the link portion in the pre-wound winding, there is also a concern that it may affect the post-wound winding. In this regard, since the link portion of the pre-wound winding is guided by the tooth-to-tooth guide portion, the loosening of the link portion is limited, and thus, each phase winding can be properly wound.

According to measure 5, at least one electrical insulation member is placed on at least one of two opposite axial end portions of the stator core and is configured to electrically insulate between one or more of the plurality of teeth and one or more of the plurality of winding segments of the plurality of phase windings; and the at least one electrical insulation member is provided with at least one holding portion which is positioned on a proximal end side or a distal end side of an adjacent one or more of the plurality of teeth adjacent to the at least one holding portion. The at least one holding portion holds: one conductor wire end portion of a conductor wire of the first phase winding which forms a winding start side of the first phase winding; another conductor wire end portion of the conductor wire of the first phase winding which forms a winding terminal side of the first phase winding; one conductor wire end portion of a conductor wire of the second phase winding which forms a winding start side of the second phase winding; and another conductor wire end portion of the conductor wire of the second phase winding which forms a winding terminal side of the second phase winding.

The conductor wire end portions at the winding start side and the winding terminal side of each of the first phase winding and the second phase winding are held by the at least one holding portion which is positioned on the proximal end side or the distal end side of the plurality of teeth at the at least one electrical insulation member. This allows for the proper positioning of the conductor wire end portions of each phase winding, making it easier to connect to, for example, the busbar. Additionally, it is expected to have the effect of limiting the loosening of the conductor wire during the winding work of each phase winding.

According to measure 6, the stator core is divisible in the circumferential direction and is formed by a plurality of segmented cores each of which has a corresponding one or more of the plurality of teeth; and the at least one holding portion is a plurality of holding portions, and each of the plurality of segmented cores is provided with at least one of the plurality of holding portions.

The stator core is formed by the plurality of segmented cores, and each segmented core is provided with the at least one of the plurality of holding portions which hold the conductor wire end portions of the corresponding phase windings. In this case, with the structure where the corresponding winding segment is wound around the tooth of each segmented core, it is possible to optimally hold the conductor wire end portion pulled out from the winding segment.

According to measure 7, in a case where each of a number of turns of the winding segment wound around the first tooth and a number of turns of the winding segment wound around the third tooth is Na, and a number of turns of each of the winding segments wound around the second tooth is Nb, a relationship of Na/2 < Nb is satisfied.

In the case where the number of turns of the winding segments on each of the two end teeth (first and third teeth) among the three teeth consecutively arranged in the circumferential direction is Na, and the number of turns of each of the winding segments on the center tooth (second tooth) is Nb, and the relationship between these numbers of turns is Na/2 < Nb, the amount of conductor wires on the center tooth, i.e., the common tooth, is increased compared to the other teeth. Therefore, at the time of winding the conductor wires around the common tooth, there is a concern that winding irregularities may occur. In this regard, by defining the lead-out positions of the conductor wire end portions of each phase winding, it is possible to limit the inconvenience caused by the winding irregularities of the conductor wires.

Additionally, by guiding the link portion of the phase winding through the tooth-to-tooth guide portion and holding the conductor wire end portions with the holding portions, it is expected to also have the effect of limiting inconveniences caused by the winding irregularities of the conductor wire.

According to measure 8, the stator includes a busbar module. The busbar module includes: a plurality of busbars, wherein each of two conductor wire end portions of a conductor wire of each of the plurality of phase windings is electrically connected to a corresponding one of the plurality of busbars; and a busbar holder that holds the plurality of busbars. Each of the two conductor wire end portions, which respectively form one end portion and another end portion of each of the plurality of phase windings, is connected to the corresponding one of the plurality of busbars in a state where each of the two conductor wire end portions of each of the plurality of phase windings is pulled out to extend in an axial direction and is inserted through a corresponding one of a plurality of insertion through-holes of the busbar holder.

In each phase winding wound around each corresponding one of the first to third teeth, which are consecutively arranged in the circumferential direction, the conductor wire end portion is pulled out from the proximal end portion or the distal end portion of each corresponding tooth. In other words, the conductor wire end portion is pulled out from the predetermined position relative to each corresponding tooth. In this case, it is possible to easily and appropriately connect the conductor wire end portions of each phase winding to the busbar module installed on the side of the one end of the stator core in the axial direction.

According to measure 9, a number of the plurality of teeth of the stator core is 3 x n, where n is an integer. Among the plurality of teeth, each set of three teeth arranged in the circumferential direction forms a corresponding one of a plurality of tooth groups. The busbar module is shaped in a circular ring form which is coaxial with the stator core. Corresponding two of the plurality of phase windings, which respectively correspond to the first phase winding and the second phase winding, are wound at each of the plurality of tooth groups; and the busbar module is installed on a side of one end of the stator core in the axial direction.

According to the above configuration, it is possible to optimally wind the stator windings on all the teeth (the number of the teeth is 3xn) of the stator core, and it is also possible to easily and appropriately assemble the busbar module to the tooth groups (the number of the tooth groups is n).

### BRIEF DESCRIPTION OF DRAWINGS

The present disclosure, together with additional objectives, features and advantages thereof, will be best understood from the following description in view of the accompanying drawings.
FIG. 1 is a longitudinal cross-sectional view of an electric motor.
FIG. 2 is a transverse cross-sectional view of the electric motor.
FIG. 3 is a diagram showing an electrical structure of a control device.
FIG. 4 is a perspective view of a stator.
FIG. 5 is a plan view of the stator.
FIG. 6 is a perspective view showing a structure of a stator core.
FIG. 7 is a winding configuration diagram of stator windings.
FIG. 8 is a diagram showing a corresponding relationship of each winding segment of the stator windings relative to its corresponding tooth.
FIG. 9 is a diagram showing a structure of a segmented core.
FIG. 10 is a perspective view showing a state in which the winding segments are wound on one tooth group.
FIG. 11 is a perspective view of a busbar module.
FIG. 12 is a perspective view showing structures of busbars.
FIG. 13 is a perspective view showing a structure of a busbar holder.
FIG. 14 is a perspective view showing a state where the busbar module is installed to the stator.
FIG. 15 is a perspective view showing a state in which the winding segments are wound on one tooth group according to a second embodiment.
FIG. 16 is a plan view of the tooth group as seen in an axial direction.
FIG. 17 is a winding configuration diagram of stator windings according to another example.

### DESCRIPTION OF EMBODIMENTS

### (First Embodiment)

Hereinafter, embodiments will be described with reference to the drawings. Among the following embodiments, portions, which are the same or equivalent to each other, will be indicated by the same reference signs, and redundant description of these portions are omitted for the sake of simplicity. In the first embodiment, an electric motor 10, which serves as a rotary electric machine, is exemplified and is explained.

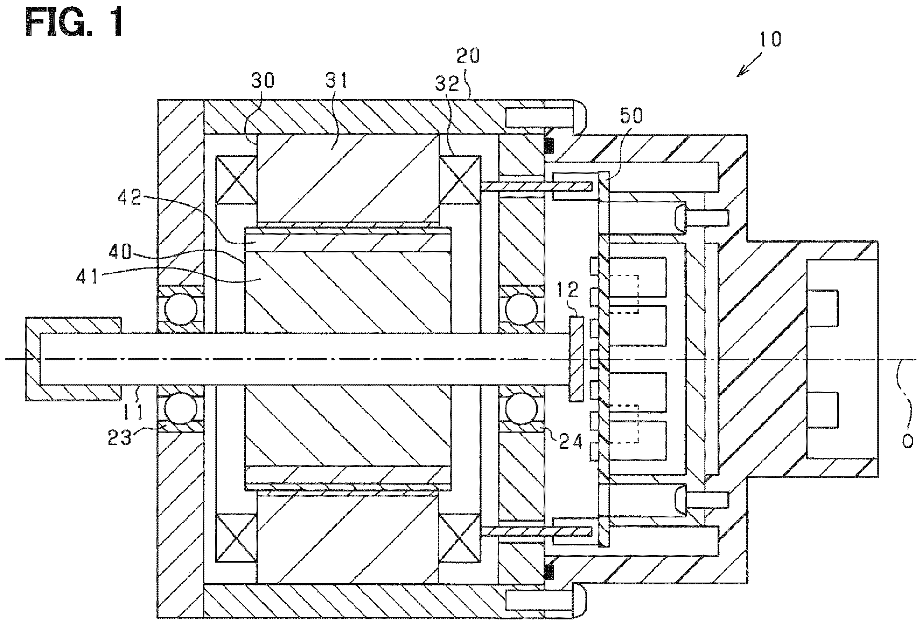

The electric motor 10 shown in FIG. 1 is a permanent magnet field motor, specifically a permanent magnet synchronous machine having three-phase windings. In other words, the electric motor 10 is a brushless motor. The three-phase windings may include two systems of three phase windings. The electric motor 10 includes: a housing 20; a stator 30 that is fixed to the housing 20; a rotor 40 that rotates relative to the stator 30; and a rotatable shaft 11 to which the rotor 40 is fixed. In the present embodiment, an axial direction refers to an axial direction of a central axis of the rotatable shaft 11, and a radial direction refers to a radial direction of the central axis of the rotatable shaft 11. Furthermore, a circumferential direction refers to a circumferential direction around the central axis of the rotatable shaft 11.

The housing 20 is shaped in a cylindrical tubular form, and the stator 30 and the rotor 40 are received in the housing 20. Two bearings 23, 24 are installed in the housing 20, and the rotatable shaft 11 is rotatably supported by the bearings 23, 24. A central axis of an inner peripheral surface of the housing 20 is coaxial with the central axis of the rotatable shaft 11. An angle sensor 12 is installed to an axial end portion of the rotatable shaft 11. The angle sensor 12 may be a magnetic sensor or a resolver.

The stator 30 is axially placed generally at a center portion of the housing 20 and is shaped in a cylindrical tubular form along an inner periphery of the housing 20. The stator 30 is fixed to an inner peripheral surface of the housing 20 such that the stator 30 is centered on the central axis O of the rotatable shaft 11. The stator 30 forms part of a magnetic circuit. The stator 30 includes: a stator core 31 which is shaped in a circular ring form and is positioned on a radially outer side of the rotor 40; and a plurality of stator windings 32 which are wound on the stator core 31.

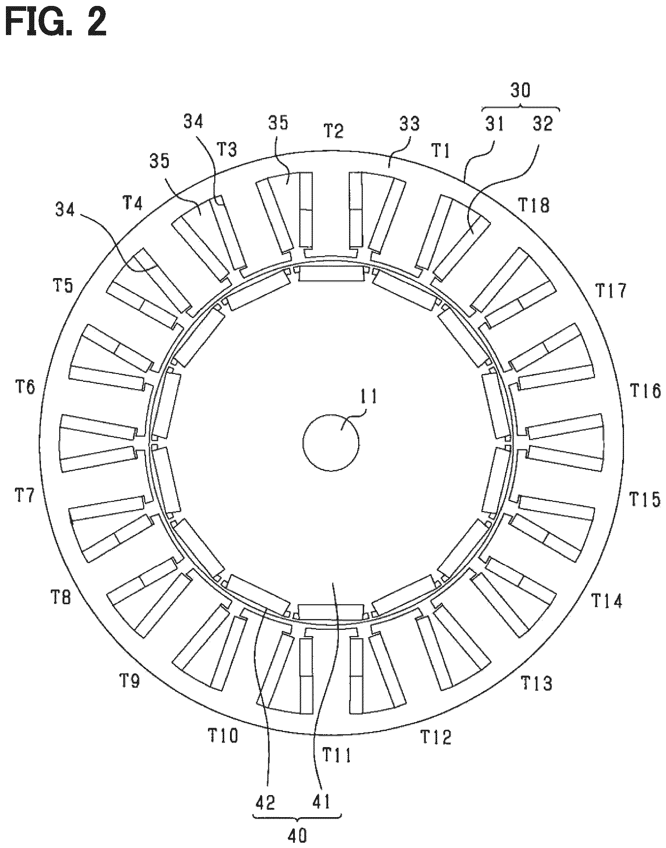

As shown in FIG. 2, the stator core 31 includes: a back yoke 33 which is shaped in a circular ring form; and a plurality of teeth 34 which radially inwardly project from the back yoke 33 and arranged at predetermined intervals in the circumferential direction. Each of a plurality of slots 35 is formed between corresponding adjacent two of the teeth 34. In the stator core 31, the teeth 34 are arranged at equal intervals in the circumferential direction, and the stator windings 32 are wound on these teeth 34. As a result, conductors of the stator windings 32 are respectively received in each corresponding one of the slots 35. In the present embodiment, the number of the teeth 34 and the number of the slots 35 are each set to 18. For the sake of explanation, the teeth 34 are designated with reference signs T1 to T18, respectively, in this order in a counterclockwise direction along the circumferential direction. When it is necessary to indicate the tooth number, the teeth 34 are also referred to as teeth T1, T2, T3, and so on. The stator windings 32 are held in a state where the stator windings 32 are respectively received in each corresponding one of the slots 35, and the stator windings 32 generate a magnetic flux when an electric power (AC power) is supplied to the stator windings 32.

The stator core 31 is formed by stacking a plurality of thin steel plates (core sheets), which are made of a magnetic material, in the axial direction of the stator core 31. The steel plates may be formed, for example, by pressing and punching a strip of electromagnetic steel sheet.

The rotor 40 forms part of the magnetic circuit. The rotor 40 has a plurality of magnetic poles arranged in the circumferential direction and are opposed to the stator 30 in the radial direction. In the present embodiment, the number of the magnetic poles of the rotor 40 is 14 (i.e., the number of magnetic pole pairs is 7). The rotor 40 includes: a rotor core 41 made of a magnetic material; and a plurality of permanent magnets 42 fixed to the rotor core 41. Specifically, as shown in FIG. 2, the rotor 40 has fourteen permanent magnets 42, which serve as magnet parts and are arranged to form alternating polarities in the circumferential direction. These permanent magnets 42 are embedded in receiving holes of the rotor core 41 each of which extends in the axial direction of the rotor core 41.

The rotor 40 may have a known structure, such as an IPM (Interior Permanent Magnet) type rotor or an SPM (Surface Permanent Magnet) type rotor. Additionally, a field winding type rotor may be employed as the rotor 40. In the present embodiment, the IPM type rotor is employed. The rotatable shaft 11 is inserted through the rotor 40 such that the rotor 40 is fixed to the rotatable shaft 11 to rotate integrally with the rotatable shaft 11 about the rotatable shaft 11.

A control device 50 is connected to the electric motor 10. The control device 50 includes a microcomputer, which has a CPU, a ROM, a RAM and I/O device, as a main component of the control device 50. The control device 50 implements various functions when the CPU executes a program(s) stored in the ROM. The various functions may be realized by an electronic circuit(s), which is hardware, or at least partially by software, i.e., processes executed on the computer.

One of the functions of the control device 50 is a function of converting the electric power supplied from an external source (e.g., a battery) and supplying the converted electric power to the electric motor 10 to generate a drive force at the electric motor 10. Additionally, for example, the control device 50 also has a function of controlling the electric motor 10 (such as electric current control) by using information about the rotational angle inputted from the angle sensor 12.

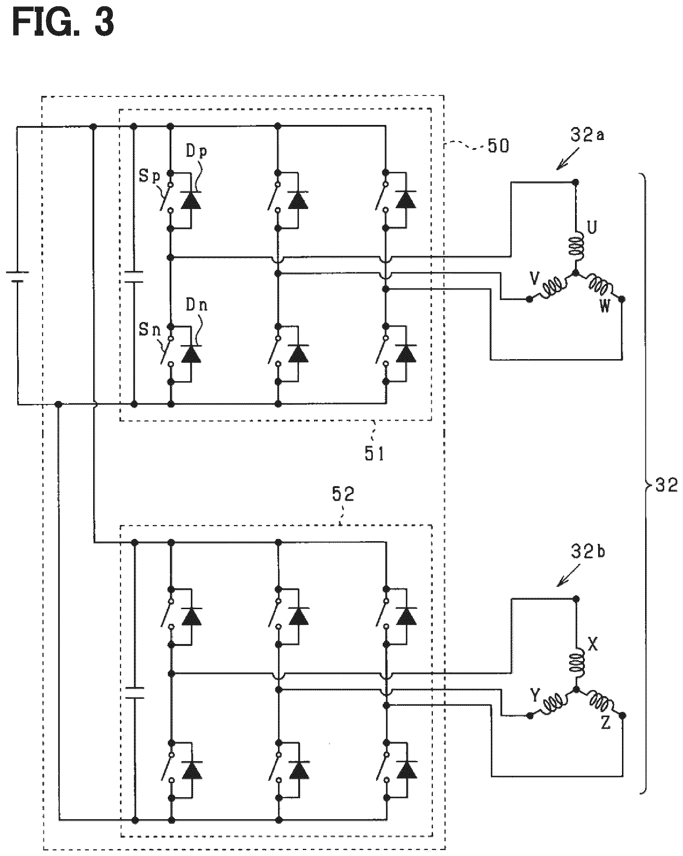

FIG. 3 is a diagram showing an electrical structure of the control device 50 according to the present embodiment.

In the present embodiment, the stator windings 32 include a first set of stator windings 32a and a second set of stator windings 32b. The control device 50 includes a first inverter circuit 51 and a second inverter circuit 52 which are respectively provided to the first set of stator windings 32a and the second set of stator windings 32b. Each inverter circuit 51, 52 is formed by a full-bridge circuit that includes a plurality of pairs of upper and lower arms while the number of the pairs of upper and lower arms is equal to the number of phases of the three-phase system. The control device 50 controls the electric current in each phase by turning the switching device provided in each corresponding arm on and off.

Specifically, the first inverter circuit 51 includes a series connection of an upper arm switch Sp and a lower arm switch Sn as switching devices for each of the three phases, i.e., a U-phase, a V-phase and a W-phase. In the present embodiment, a voltage-controlled semiconductor switching device is used as each of the upper arm switch Sp and the lower arm switch Sn for each phase, specifically using an IGBT (Insulated Gate Bipolar Transistor). Alternatively, a MOSFET (Metal-Oxide-Semiconductor Field-Effect Transistor) may be used. A freewheeling diode (recirculating diode) Dp, Dn is connected in reverse parallel to each of the upper arm switch Sp and the lower arm switch Sn for each phase.

A high-potential side terminal (collector) of the upper arm switch Sp for each phase is connected to a positive terminal of the battery. Additionally, a low-potential side terminal (emitter) of the lower arm switch Sn for each phase is connected to a negative terminal (ground) of the battery. An intermediate connection point between the upper arm switch Sp and the lower arm switch Sn for each phase is connected to one end of a corresponding phase winding among the first set of stator windings 32a. The first set of stator windings 32a includes a U-phase winding, a V-phase winding and a W-phase winding. In the first inverter circuit 51, one end of each of the U-phase winding, the V-phase winding and the W-phase winding is connected to the corresponding intermediate connection point between the corresponding upper arm switch Sp and the corresponding lower arm switch Sn.

Since the second inverter circuit 52 has the same structure as the first inverter circuit 51, a detailed explanation of the second inverter circuit 52 is omitted here. The second set of stator windings 32b include an X-phase winding, a Y-phase winding and a Z-phase winding. In the second inverter circuit 52, one end of each of the X-phase winding, the Y-phase winding and the Z-phase winding is connected to the intermediate connection point between the corresponding upper arm switch Sp and the corresponding lower arm switch Sn.

The three-phase current supplied from the first inverter circuit 51 and the three-phase current supplied from the second inverter circuit 52 have a predetermined current phase difference from each other.

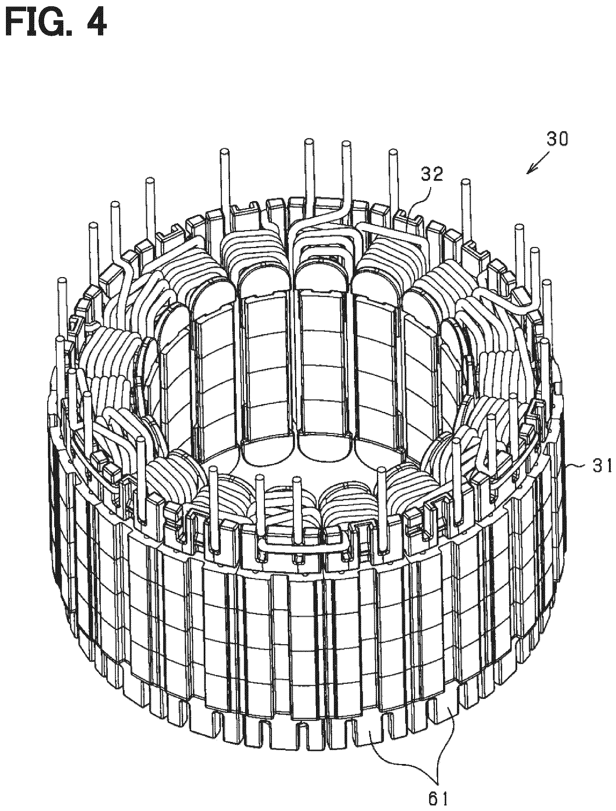

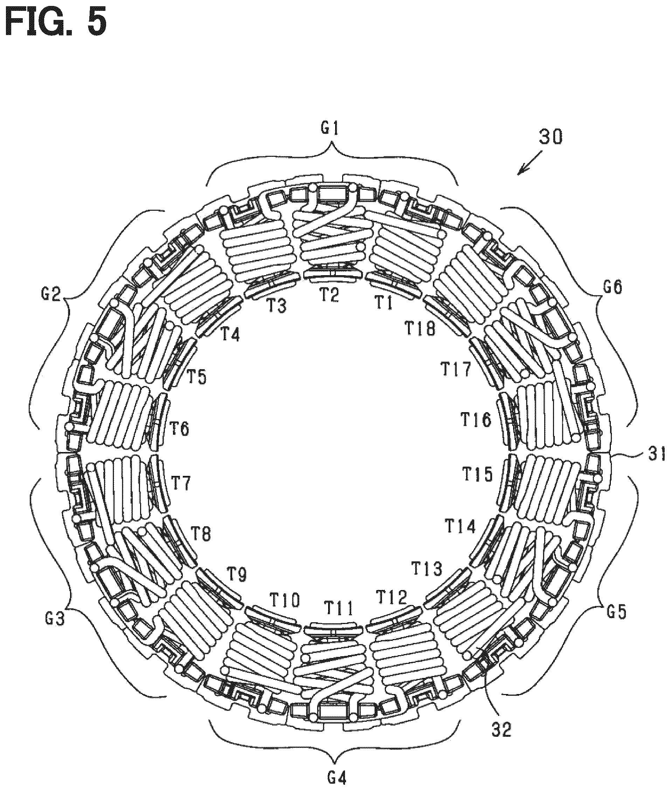

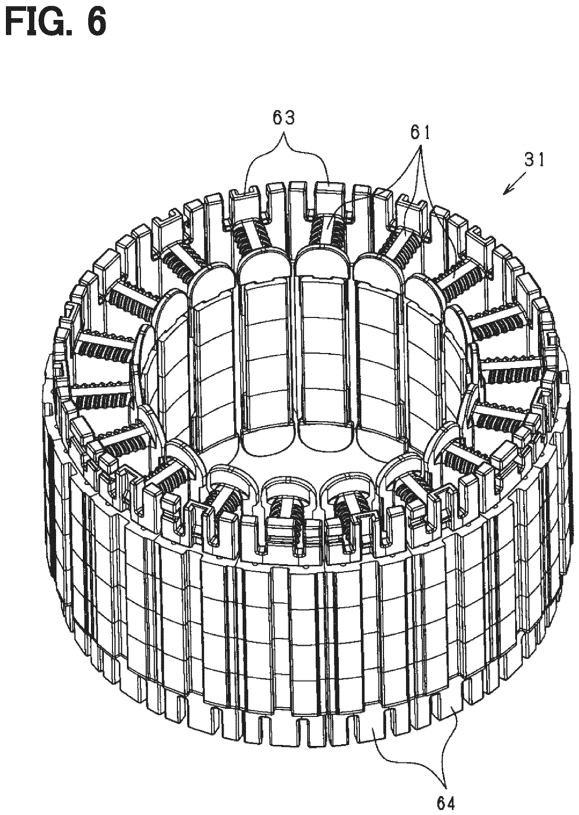

Hereinafter, the structure of the stator 30 will be described in detail. FIG. 4 is a perspective view of the stator 30, and FIG. 5 is a plan view of the stator 30. Furthermore, FIG. 6 is a perspective view showing a structure of the stator core 31. The stator 30 shown in FIGS. 4 and 5 corresponds to the stator 30 shown in FIG. 2.

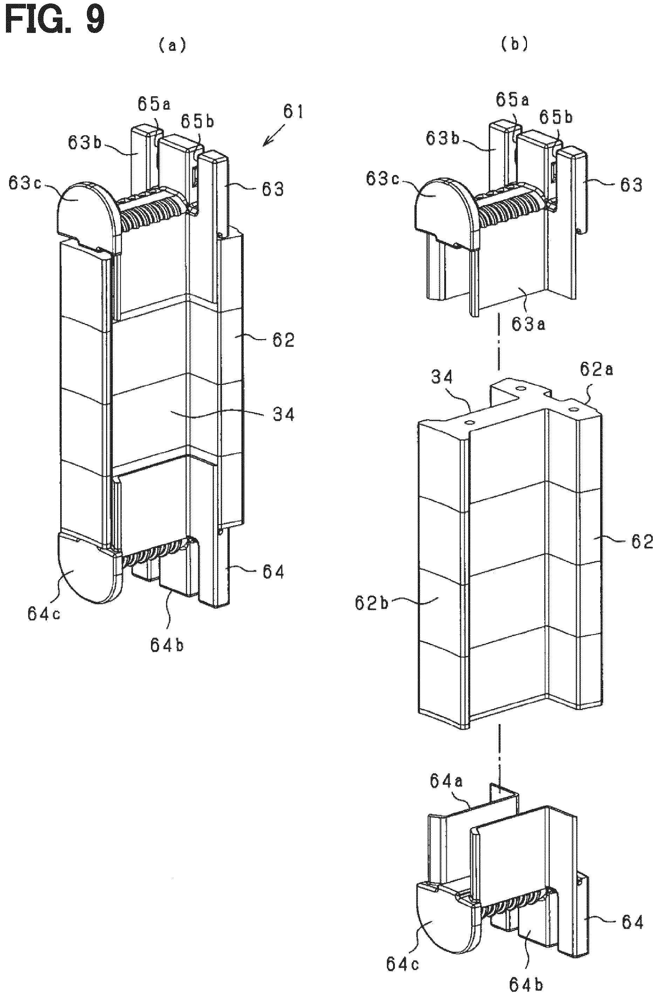

In the stator 30, the stator core 31 is formed by a plurality of segmented cores 61. These segmented cores 61 are arranged in the circumferential direction, forming the stator core 31 into a cylindrical tubular form. Each segmented core 61 has the corresponding tooth 34 (see (a) of FIG. 9). When the segmented cores 61 are arranged in the circumferential direction, the teeth 34 and slots 35 are alternately arranged in the circumferential direction as shown in FIG. 2. In the present embodiment, the stator core 31 is formed by eighteen segmented cores 61. The stator windings 32 are formed by winding each of conductor wires around each corresponding one of the teeth 34 using concentrated winding.

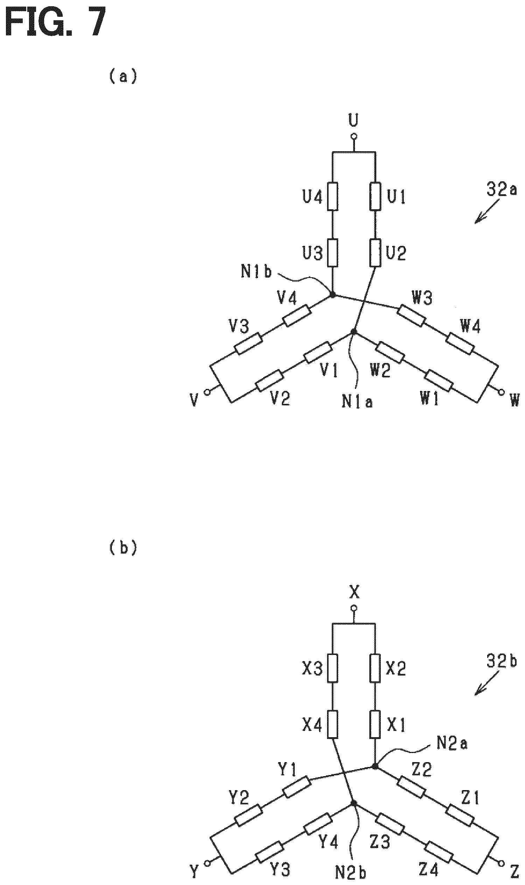

FIG. 7 is a winding configuration diagram of the stator windings 32 according to the present embodiment. Here, (a) of FIG. 7 shows the configuration of the U-phase winding, the V-phase winding and the W-phase winding of the first set of stator windings 32a. Furthermore, (b) of FIG. 7 shows the configuration of the phase windings for the X-phase winding, the Y-phase winding and the Z-phase winding of the second set of stator windings 32b. In each set of stator windings 32a, 32b, the phase windings are connected with each other by a star connection (Y-connection).

As shown in (a) of FIG. 7, in the first set of stator windings 32a, the U-phase winding includes four winding segments U1, U2, U3, U4, and the V-phase winding includes four winding segments V1, V2, V3, V4, and the W-phase winding include four winding segments W1, W2, W3, W4. One end of a series-connected winding section with the winding segments U1, U2 connected in series, one end of a series-connected winding section with the winding segments V1, V2 connected in series, and one end of a series-connected winding section with the winding segments W1, W2 connected in series are connected together at a neutral point N1a. Furthermore, one end of a series-connected winding section with the winding segments U3, U4 connected in series, one end of a series-connected winding section with the winding segments V3, V4 connected in series, and one end of a series-connected winding section with the winding segments W3, W4 connected in series are connected together at a neutral point N1b.

As shown in (b) of FIG. 7, in the second set of stator windings 32b, the X-phase winding includes four winding segments X1, X2, X3, X4, and the Y-phase winding includes four winding segments Y1, Y2, Y3, Y4, and the Z-phase winding includes four winding segments Z1, Z2, Z3, Z4. One end of a series-connected winding section with the winding segments X1, X2 connected in series, one end of a series-connected winding section with the winding segments Y1, Y2 connected in series, and one end of a series-connected winding section with the winding segments Z1, Z2 connected in series are connected together at a neutral point N2a. Furthermore, one end of a series-connected winding section with the winding segments X3, X4 connected in series, one end of a series-connected winding section with the winding segments Y3, Y4 connected in series, and one end of a series-connected winding section with the winding segments Z3, Z4 connected in series are connected together at a neutral point N2b.

Besides the above-described configuration where in each set of stator windings 32a, 32b, the four winding segments of each phase winding are divided to form two series-connected winding sections each with the two winding segments connected in series, and the corresponding series-connected winding sections are connected together to form the star connection, the following arrangement may be employed. That is, in each set of stator windings 32a, 32b, the four winding segments of each phase winding may be divided to form two winding sections connected in parallel, and the corresponding winding sections may be connected together to form the star connection. In this case, the two neutral points (N1a, N1b) in the first set of stator windings 32a are integrated into one neutral point, and the two neutral points (N2a, N2b) in the second set of stator windings 32b are also integrated into one neutral point.

The winding segments U1-U4, V1-V4, W1-W4 of the respective phases in the first set of stator windings 32a, and the winding segments X1-X4, Y1-Y4, Z1-Z4 of the respective phases in the second set of stator windings 32b are wound on the teeth 34 of the stator core 31 using concentrated winding. In the present embodiment, the twelve winding segments of the first set of stator windings 32a and the twelve winding segments of the second set of stator windings 32b are distributed and wound on the eighteen teeth 34 of the stator core 31. Hereinafter, this feature will be described in detail.

In the stator core 31, the total of eighteen teeth 34 are divided into a plurality of tooth groups each of which is formed by corresponding three of the teeth 34, and the winding segments of corresponding two different phase windings are wound on these three teeth 34 of each tooth group. Specifically, as shown in FIG. 5, in the stator 30, all of the teeth 34 (T1-T18) of the stator core 31 are divided into six tooth groups G1-G6. Corresponding two of the winding segments U1-U4, V1-V4, W1-W4 of the first set of stator windings 32a and corresponding two of the winding segments X1-X4, Y1-Y4, Z1-Z4 of the second set of stator windings 32b are distributed to and are wounded at each corresponding tooth group G1-G6. In this case, at each tooth group G1-G6, one of the two winding segments of the corresponding one of the first set of stator windings 32a is wound around one of circumferentially opposite two of the three teeth 34, and one of the two winding segments of the corresponding one of the second set of stator windings 32b is wound around the other one of the circumferentially opposite two of the three teeth 34. Furthermore, at each tooth group G1-G6, the other one of the two winding segments of the corresponding one of the first set of stator windings 32a and the other one of the winding segments of the corresponding one of the second set of stator windings 32b are wound around the center tooth among the three teeth 34.

Here, it is assumed that in each of the tooth groups G1-G6, the three teeth 34, which are consecutively arranged in the circumferential, are defined as a first tooth, a second tooth and a third tooth, respectively, in this order. Among the phase windings, two winding segments of a first phase winding are wound continuously around the first tooth and the second tooth, respectively, and two winding segments of a second phase winding are wound continuously around the second tooth and the third tooth, respectively. Among the three consecutive teeth 34, the center tooth, which is the second tooth, serves as a common tooth around which both the first phase winding and the second phase winding are wound. In this case, the first phase winding is any one of the six phase windings in the first and second sets of stator windings 32a, 32b, and the second phase winding is a different phase winding, which is different from the first phase winding among the same six phase windings.

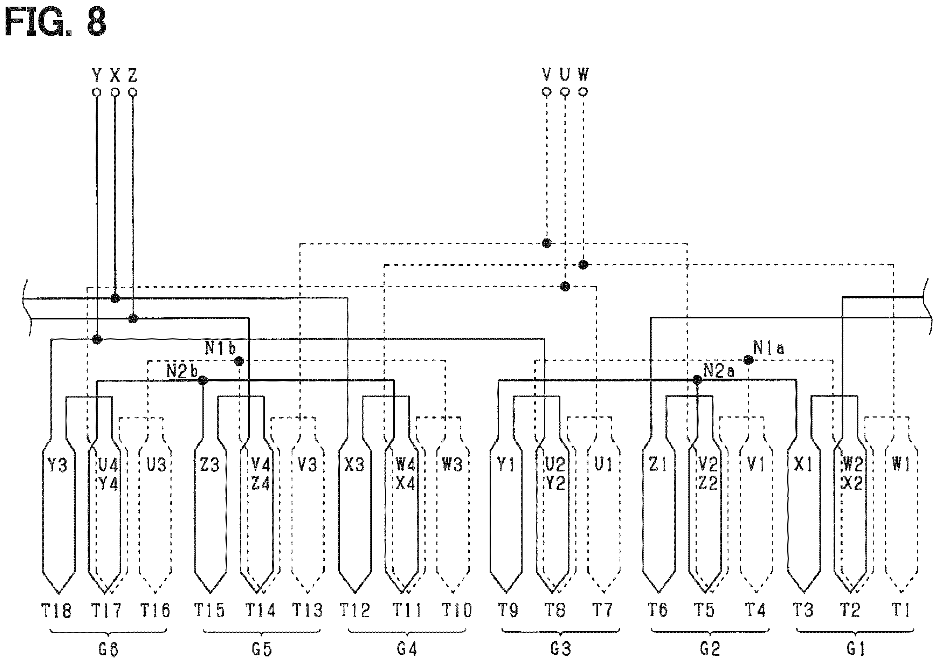

FIG. 8 is a diagram showing a corresponding relationship of each of the winding segments of the stator windings 32a, 32b relative to its corresponding tooth T1-T18. In FIG. 8, in, for example, the tooth group G1, the winding segment W1 of one of the first set of stator windings 32a is wound around the tooth (serving as the first tooth) T1, and the winding segment W2 of the one of the first set of stator windings 32a and the winding segment X2 of one of the second set of stator windings 32b are wound around the tooth (serving as the second tooth) T2, and the winding segment X1 of the one of the second set of stator windings 32b is wound around the tooth (serving as the third tooth) T3. The explanation for the other tooth groups G2-G6 is omitted, but the winding segments of each of the remaining tooth groups G2-G6 are wound in the same manner as that of the tooth group G1. The winding segments are wound on the first to third teeth of each of the remaining tooth groups G2-G6 in a manner shown in FIG. 8.

The winding structure of each winding segment in each tooth group will be explained below. Here, prior to explaining the winding structure of each winding segment, the structure of the stator core 31 will be described in more detail.

In FIG. 9, (a) is a perspective view of the segmented core 61, and (b) is an exploded perspective view of the segmented core 61. The segmented core 61 includes: a core main body 62, which is a steel sheet laminate; and two electrical insulation members 63, 64, which are provided at one axial end and the other axial end (the upper and lower sides in the drawing) of the core main body 62. The core main body 62 includes: the tooth 34 extending in the radial direction (the radial direction of the stator core 31); a yoke portion 62a formed at one end of the tooth 34 in the radial direction; and a flange portion 62b formed at the other end of the tooth 34 in the radial direction. The yoke portion 62a corresponds to the back yoke 33 of the stator core 31 shown in FIG. 2. In the state where the plurality of segmented cores 61 are arranged in the circumferential direction, the yoke portions 62a of each adjacent two of the segmented cores 61 are coupled with each other, forming the back yoke 33 in a circular ring form. It is preferable that the yoke portions 62a of the adjacent segmented cores 61 are joined together by an adhesive or other means.

The electrical insulation members 63, 64 are made of, for example, a dielectric resin material and are installed to the two opposite axial ends, respectively, of the tooth 34. The electrical insulation member 63 includes: a covering portion 63a that covers an axial end surface (the upper surface in the drawing) of the tooth 34; and two rising portions 63b, 63c which are provided at one radial end and the other radial end, respectively, of the covering portion 63a and extend in the axial direction (the upward direction in the drawing). The rising portion 63b is positioned on the yoke portion 62a side of the tooth 34 in the radial direction, i.e., on the proximal end side of the tooth 34. Furthermore, the rising portion 63c is positioned on the opposite side of the tooth 34 opposite to the yoke portion 62a in the radial direction, i.e., on the distal end side of the tooth 34. The rising portion 63b has two grooves 65a, 65b which are arranged one after another in the circumferential direction. Each of the grooves 65a, 65b is configured to receive the conductor wire of the corresponding winding segment. Similarly, the electrical insulation member 64 includes a covering portion 64a and two rising portions 64b, 64c.

The segmented core 61 is formed by installing the electrical insulation members 63, 64 to the core main body 62, and the corresponding conductor wire is wound a plurality of times across each electrical insulation member 63, 64, thereby winding the winding segment around the tooth 34 of the segmented core 61.

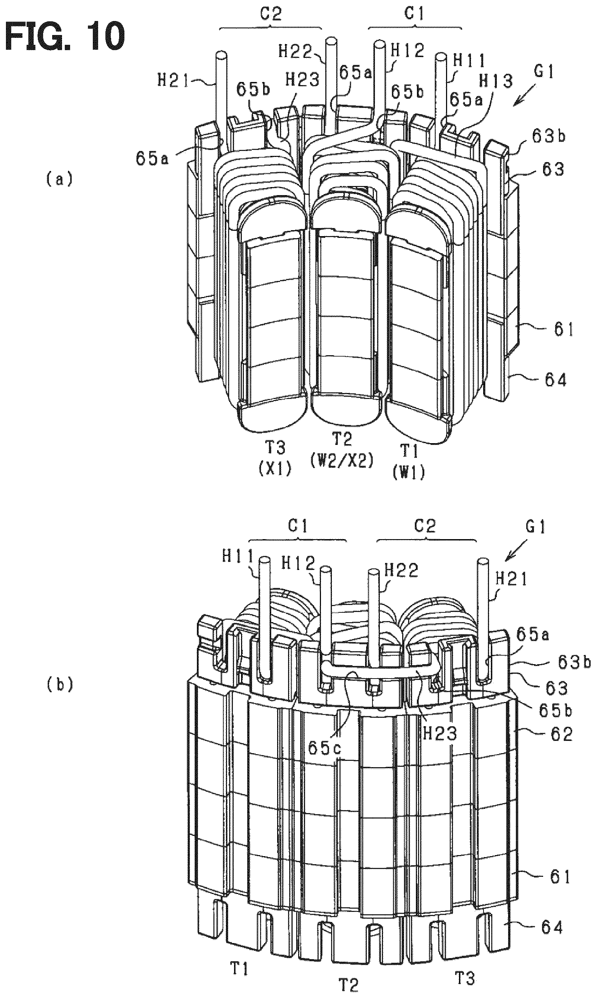

FIG. 10 is a perspective view showing the state where the winding segments are wound at one of the tooth groups G, with (a) in FIG. 10 being a perspective view taken from the radially inner side of the one of the tooth groups G and (b) in FIG. 10 being a perspective view taken from the radially outer side of the one of the tooth groups G. In (a) and (b) of FIG. 10, the tooth group G1, which includes teeth T1-T3, is taken as an example. In this tooth group G1, the phase winding wound around teeth T1, T2 (the W-phase winding with the winding segments W1, W2) is referred to as a first phase winding C1, and the phase winding wound around the teeth T2, T3 (the X-phase winding with the winding segments X1, X2) is referred to as a second phase winding C2. Among the first phase winding C1 and the second phase winding C2, the second phase winding C2 is a pre-wound winding, which is wound first at a time of winding the first phase winding C1 and the second phase winding C2, and the first phase winding C1 is a post-wound winding, which is wound later after the pre-wound winding.

In the second phase winding C2, which is the pre-wound winding, the conductor wire is wound in the order of the tooth T3 and then the tooth T2 during the winding process of the conductor wire. At these teeth T2, T3, a winding direction of the conductor wire (the conductor wire segment) around the tooth T2 and a winding direction of the conductor wire (the conductor wire segment) around the tooth T3 are opposite to each other. In (a) of FIG. 10, the conductor wire (the conductor wire segment) is wound around the tooth T3 in the counterclockwise direction with the number of turns Na, and is then wound around the tooth T2 in the clockwise direction with the number of turns Nb. In the second phase winding C2, one conductor wire end portion of the second phase winding C2, which forms a winding start side of the second phase winding C2, and another conductor wire end portion of the second phase winding C2, which forms a winding terminal side of the second phase winding C2, are pulled out from the segmented cores 61 in the axial direction and form a lead-out portion H21 and a lead-out portion H22, respectively, each of which extends a predetermined length from the corresponding segmented core 61.

The lead-out portion H21 at the winding start side is pulled out from the proximal end portion of the tooth T3 (the third tooth), and the lead-out portion H22 at the winding terminal side is pulled out from the proximal end portion of the tooth T2 (the second tooth). In this case, particularly, the grooves 65a, 65b are formed at the rising portion 63b of the electrical insulation member 63 of each segmented core 61, and the lead-out portion H21 is pulled out in a state where the lead-out portion H21 is inserted into the groove 65a of the electrical insulation member 63 which corresponds to the tooth T3. Furthermore, the lead-out portion H22 is pulled out in a state where the lead-out portion H22 is inserted into the groove 65a of the electrical insulation member 63 which corresponds to the tooth T2. The lead-out portions H21, H22 are respectively held by the grooves 65a, which serve as holding portions, of the electrical insulation members 63.

A portion of the second phase winding C2, which is located between and couples the winding segment X1 wound around the tooth T3 and the winding segment X2 wound around the tooth T2, forms a link portion H23 that spans between these teeth T3, T2. This link portion H23 is guided to the outside of the rising portion 63b of the electrical insulation member 63. Specifically, the link portion H23 is a conductor wire section between a tooth winding terminal position of the winding segment X1 and a tooth winding start position of the winding segment X2, and this link portion H23 is pulled out to the outside of the rising portion 63b between the groove 65b at the tooth T3 and the groove 65b at the tooth T2. As shown in (b) of FIG. 10, a guide groove 65c is formed at outer surfaces of the adjacent rising portions 63b, and the link portion H23 is guided in a state where the link portion H2 is installed into the guide groove 65c. These rising portions 63b of the electrical insulation members 63 serve as a tooth-to-tooth guide portion.

In the first phase winding C1, which is the post-wound winding, the conductor wire is wound in the order of the tooth T1 and then the tooth T2 during the winding process of the conductor wire. Here, the first and second phase windings C1, C2 are compared. The winding process of the first and second phase windings C1, C2 is performed such that each of the first and second phase windings C1, C2 is wound in an opposite sequence in the circumferential direction compared to the other one of the first and second phase windings C1, C2 from one of the corresponding circumferentially adjacent two of the teeth to the other one of the circumferentially adjacent two of the teeth. In other words, in the second phase winding C2, which is the pre-wound winding, the two winding segments X1, X2 are wound from left to right in (a) of FIG. 10. In contrast, in the first phase winding C1, which is the post-wound winding, the two winding segments W1, W2 are wound from right to left in (a) of FIG. 10.

At each of the teeth T1, T2, the conductor wire is wound in a direction opposite to that of the conductor wire wound around the other one of the teeth T1, T2. Specifically, in (a) of FIG. 10, the conductor wire is wound around the tooth T1 in the counterclockwise direction with the number of turns Na, and is then wound around the tooth T2 in the clockwise direction with the number of turns Nb. In the first phase winding C1, one conductor wire end portion of the first phase winding C1, which forms a winding start side of the first phase winding C1, and another conductor wire end portion of the first phase winding C1, which forms a winding terminal side of the first phase winding C1, are pulled out from the segmented cores 61 in the axial direction and form a lead-out portion H11 and a lead-out portion H12, respectively, each of which extends a predetermined length from the corresponding segmented core 61.

The lead-out portion H11 at the winding start side is pulled out from the proximal end portion of the tooth T1 (the first tooth), and the lead-out portion H12 at the winding terminal side is pulled out from the proximal end portion of the tooth T2 (the second tooth). In this case, particularly, the lead-out portion H11 is pulled out in a state where the lead-out portion H11 is inserted into the groove 65a of the electrical insulation member 63 which corresponds to the tooth T1. Furthermore, the lead-out portion H12 is pulled out in a state where the lead-out portion H12 is inserted into the groove 65b of the electrical insulation member 63 which corresponds to the tooth T2.

A portion of the first phase winding C1, which is located between and couples the winding segment W1 wound around the tooth T1 and the winding segment W2 wound around the tooth T2, forms a link portion H13 that spans between these teeth T1, T2. This link portion H13 is not guided to the outside of the rising portion 63b of the electrical insulation member 63 unlike the link portion H23 of the second phase winding C2 and is set to span directly from the tooth T1 to the tooth T2.

With the above structure, the two lead-out portions H11, H12 of the first phase winding C1 and the two lead-out portions H21, H22 of the second phase winding C2 are arranged in the circumferential direction at the same radial position (i.e., at the proximal end portion of the corresponding respective teeth). The other tooth groups G2 to G6 also have the same winding structure as the tooth group G1 (see FIGS. 4 and 5).

As described above, in the first phase winding C1, the number of turns of the winding segment around the tooth T1 is Na, and the number of turns of the winding segment around the tooth T2 is Nb. Furthermore, in the second phase winding C2, the number of turns of the winding segment around the tooth T3 is Na, and the number of turns of the winding segment around the tooth T2 is Nb. The relationship between these numbers of turns is such that Na/2 < Nb. That is, in the present embodiment, the number of turns for each of the two teeth T1, T3, which are at two circumferentially opposite ends of the three teeth T1-T3 consecutively arranged in the circumferential direction, is Na, and the number of turns for the center tooth T2 is 2Nb. The relationship between them is Na < 2Nb. The upper limit of the number of turns Nb is, for example, the number of turns Na.

In this case, since the amount of conductor wire on the center tooth T2 (the common tooth) among the three teeth T1-T3 consecutively arranged in the circumferential direction is larger than that on each of the end teeth T1, T3, there is a concern that winding irregularities may occur at the time of winding the conductor wire around the common tooth. In this regard, according to the present embodiment, the lead-out positions of the conductor wire end portions of each phase winding are specified, and the link portion H23 of the second phase winding C2 (the pre-wound winding) is guided by the adjacent rising portions 63b of the electrical insulation members 63, and the conductor wire end portions are held by the grooves 65a of the electrical insulation members 63. The above arrangement limits inconveniences caused by the winding irregularities of the conductor wires.

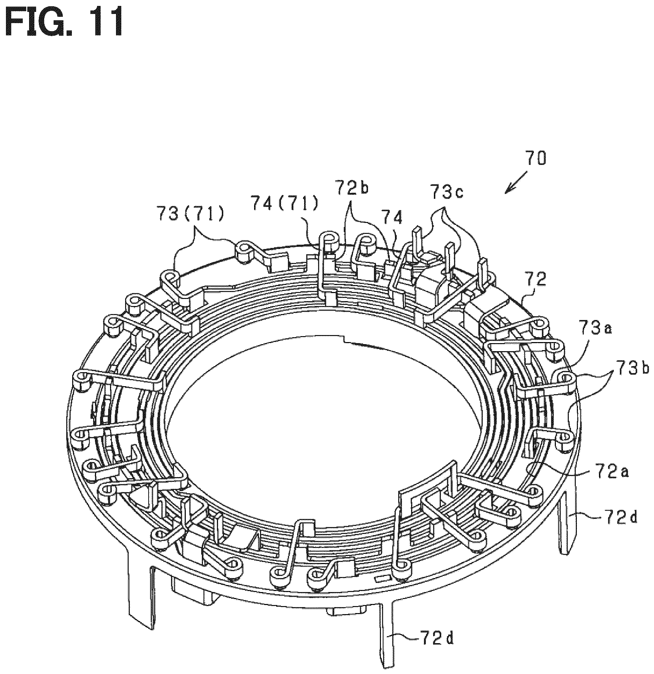

In the present embodiment, a busbar module 70 is assembled on one axial end of the stator 30, and details of this structure will be described below. FIG. 11 is a perspective view of the busbar module 70.

The busbar module 70 includes: a plurality of busbars 71; and a busbar holder 72 that holds each of these busbars 71. The busbars 71 include: a plurality of phase-specific busbars 73, each provided for the corresponding phase of the first and second sets of stator windings 32a, 32b; and a plurality of neutral point busbars 74. Each of the phase-specific busbars 73 is a conductive member that connects the winding segments of the same phase together. Furthermore, each of the neutral point busbars 74 is a conductive member that connects the winding segments of each phase together in a star connection. In the present embodiment, six busbars, which include a U-phase busbar, a V-phase busbar, a W-phase busbar, an X-phase busbar, a Y-phase busbar and a Z-phase busbar, are provided as the phase-specific busbars 73. Additionally, two neutral point busbars 74 are provided as the neutral point busbar for the first set of stator windings 32a and the neutral point busbar for the second set of stator windings 32b. Here, there is exemplified the structure where the single neutral point is provided to each of the first set of stator windings 32a and the second set of stator windings 32b.

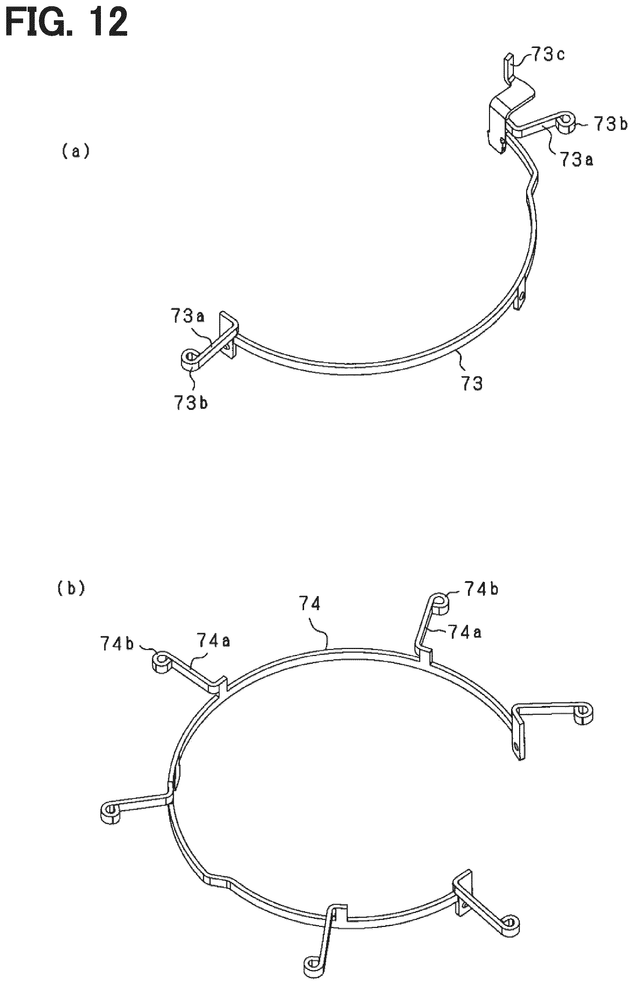

In FIG. 12, (a) is a perspective view showing a structure of one busbar which is the phase-specific busbar 73. Each phase-specific busbar 73 is shaped generally in an arcuate form as a whole, and an arm portion 73a, which radially extends, is formed at each of two opposite circumferential ends of the phase-specific busbar 73. A winding connector 73b, which is connected to a corresponding one of the phase windings, is formed at a distal end portion of each arm portion 73a. Additionally, an electric power terminal 73c for inputting/outputting the electric power is formed at the arcuate portion of the phase-specific busbar 73. As shown in FIG. 11, a radial length of the respective arm portions 73a and a circumferential position of the electric power terminal 73c differ for each phase-specific busbar 73.

In FIG. 12, (b) is a perspective view showing a structure of one busbar which is the neutral point busbar 74. Each neutral point busbar 74 is shaped generally in an arcuate form as a whole, and an arm portion 74a, which radially extends, is formed at a plurality of locations (six locations in the present embodiment) along a longitudinal direction of the neutral point busbar 74. A neutral point connector 74b, which is connected to a neutral point side end portion of the corresponding phase winding, is formed at a distal end portion of each arm portion 74a.

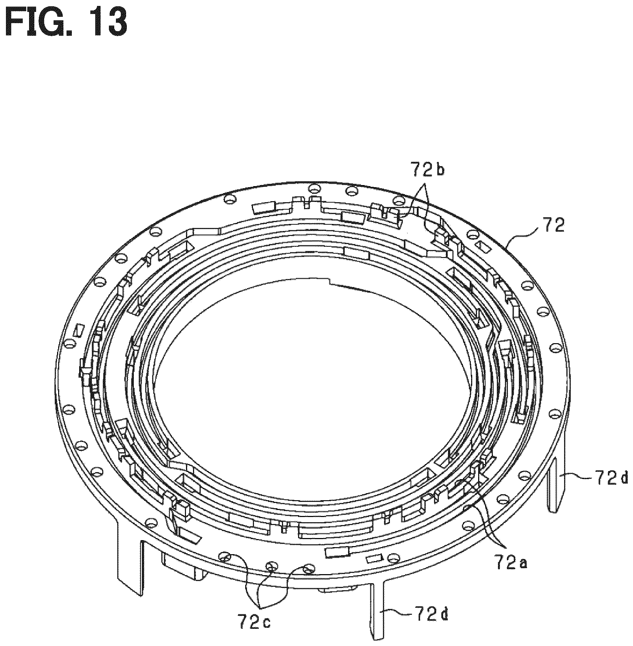

FIG. 13 is a perspective view showing a structure of the busbar holder 72. The busbar holder 72 is made of, for example, a dielectric resin material and is shaped in a circular ring form. The busbar holder 72 has a plurality of grooves 72a that respectively extend in an arcuate form in the circumferential direction. These grooves 72a are formed in a plurality of layers arranged in the radial direction, and each busbar 73, 74 is assembled in a corresponding one of the grooves 72a such that busbar plate surfaces of each radially adjacent two of the busbars 73, 74 face each other in the radial direction. Additionally, a plurality of projections 72b are formed at an upper surface of the busbar holder 72. Each of the projections 72b is a support portion that supports a corresponding one of the arm portions 73a, 74a of the busbars 73, 74. The projections 72b are dispersed in the circumferential direction according to the positions of the arm portions 73a, 74a.

A plurality of through-holes 72c, which extend through the busbar holder 72 in the axial direction (the up-down direction in the drawing), are formed at an outer periphery of the busbar holder 72, i.e., on the radially outer side of the grooves 72a. The through-holes 72c are insertion holes for inserting the lead-out portions which are the conductor wire end portions of the phase windings, i.e., the lead-out portions H11, H12, H21, H22 shown in (a) of FIG. 10. In this embodiment, the through-holes 72c, which are conductor wire connectors, are collectively provided at the outer periphery of the busbar holder 72 in the busbar module 70. Additionally, a plurality of installation portions 72d are formed at the busbar holder 72 for installing the busbar module 70 to the stator core 31.

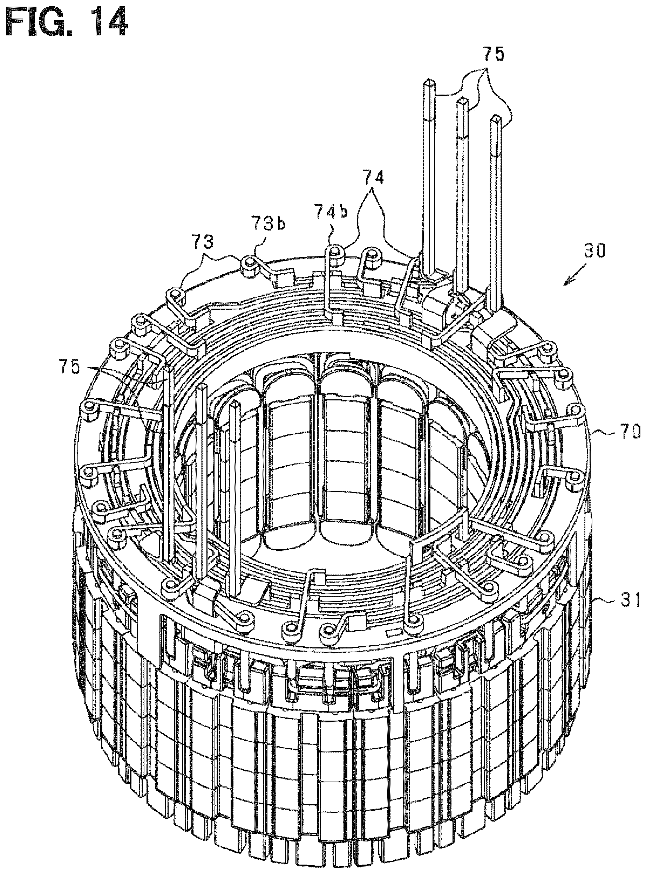

FIG. 14 is a perspective view showing a state where the busbar module 70 is installed to the stator 30. In FIG. 14, the busbar module 70 is installed coaxially with the stator core 31 at one axial end of the stator core 31.

The lead-out portions, which are the conductor wire end portions of the phase windings, are inserted through the through-holes 72c of the busbar holder 72 and are connected to the busbars 73, 74 at the upper surface of the busbar holder 72. Specifically, each of the conductor wire end portions of the phase windings is joined to the corresponding one of the connectors 73b, 74b of the busbars 73, 74 by welding or the like. As a result, at each set of stator windings 32a, 32b, the phase windings are connected to each other in the desired configuration. Additionally, the electric power lines 75 are connected to the electric power terminals 73c of the phase-specific busbars 73.

By the way, in the rotary electric machine, noise and vibration caused by torque ripple are disadvantageously generated. The torque ripple mainly consists of 6th harmonic components or 12th harmonic components, so it is desirable to suppress these. Therefore, it is desirable to perform the following control in the control device 50 using the electric motor 10 with the above configuration.

In the electric motor 10 of the above-described structure, the first tooth (T1, T4, T7, T10, T13, T16) of each tooth group is wound with the winding segment (a first coil body) of the corresponding one of the U-phase, V-phase and W-phase of the first set of stator windings 32a, and the second tooth (T2, T5, T8, T11, T14, T17) of each tooth group is wound with the winding segment (a second coil body) of the corresponding one of the U-phase, V-phase and W-phase of the first set of stator windings 32a and the winding segment (a second coil body) of the corresponding one of the X-phase, Y-phase and Z-phase of the second set of stator windings 32b, and the third tooth (T3, T6, T9, T12, T15, T18) of each tooth group is wound with the winding segment (a third coil body) of the corresponding one of the X-phase, Y-phase and Z-phase of the second set of stator windings 32b.

In this structure, a cumulative phase difference, which is a sum of each phase difference between a magnetomotive force generated by the winding segment of the corresponding phase of the first set of stator windings 32a wound around the second tooth and a magnetomotive force generated by the winding segment of the corresponding phase of the second set of stator windings 32b wound around the second tooth in each of the tooth groups, is set by the control device 50 such that each phase difference of the magnetomotive force of the second coil body of the corresponding phase relative to the magnetomotive force of the first coil body of the corresponding phase and each phase difference of the magnetomotive force of the third coil body of the corresponding phase relative to the magnetomotive force of the second coil body of the corresponding phase are within a predetermined phase range that includes 20 degrees in electrical angle, or each phase difference of the magnetomotive force of the third coil body of the corresponding phase relative to the magnetomotive force of the first coil body of the corresponding phase and each phase difference of the magnetomotive force of the second coil body of the corresponding phase relative to the magnetomotive force of the third coil body of the corresponding phase are within a predetermined phase range that includes 20 degrees in electrical angle. The cumulative phase difference is preferably set within, for example, a range of 72 to 88 degrees in electrical angle. Alternatively, the control device 50 may set a cumulative phase difference as a sum of each phase difference between the electric current flowing through the winding segment of the first set of stator windings 32a wound around the second tooth and the electric current flowing through the winding segment of the second set of stator windings 32b wound around the same second tooth in each of the tooth groups. The details of this control are described in JP7103299B2 filed by the applicant of this application.

The embodiment described above can achieve the following advantages.

In the stator core 31, among the first to third teeth, which are consecutively arranged in the circumferential direction, the two winding segments of the first phase winding C1 are wound continuously around the first tooth and the second tooth, respectively, and the two winding segments of the second phase winding C2 are wound continuously around the second tooth and the third tooth, respectively. Then, in this structure, the one end portion of the first phase winding C1 is pulled out from the proximal end portion of the first tooth, and the other end portion of the first phase winding C1 is pulled out from the proximal end portion of the second tooth. Furthermore, the one end portion of the second phase winding C2 is pulled out from the proximal end portion of the third tooth, and the other end portion of the second phase winding C2 is pulled out from the proximal end portion of the second tooth (see (a) and (b) of FIG. 10). This allows for the optimal implementation of connecting the conductor wire end portions of each phase winding to the electric power source and the neutral point while grouping each set of three teeth 34 together as one group. As a result, it is possible to optimally wind the phase windings of the corresponding two phases on the three teeth 34, which are consecutively arranged in the circumferential direction.

In the case where the second tooth centered among the three teeth (the first to third teeth) consecutively arranged in the circumferential direction is used as the common tooth, and the two phase windings (the first phase winding C1 and the second phase winding C2) are wound around this common tooth, there is a concern that the link portion of the pre-wound winding between the teeth may obstruct the winding of the post-wound winding around the second tooth. In this regard, since the rising portion 63b (the tooth-to-tooth guide portion) for guiding the link portion H23 of the pre-wound winding is provided at the axial end portion of the stator core 31 on the radially outer side of the teeth 34, it is possible to limit the inconvenience of the link portion H23 of the pre-wound winding between the teeth 34 obstructing the winding of the post-wound winding.

The electrical insulation members 63, each of which electrically insulates the corresponding tooth 34 and the corresponding winding segment(s), are provided at the axial end portion of the stator core 31 (the segmented cores 61) to guide the link portion H23 of the pre-wound winding between the teeth. With each of the electrical insulation members 63, it is possible to achieve the electrical insulation between the corresponding tooth 34 and the corresponding winding segment(s) while optimally guiding the link portion H23 between the teeth.

In the case where the conductor wire winding directions of the two winding segments of the second phase winding C2 (the pre-wound winding), which are wound around the second and third teeth, respectively, are opposite to each other, it is considered that the link portion H23 is more likely to experience loosening of the conductor wire compared to the case where the winding directions are the same (i.e., the common direction). In other words, in the case where the conductor wires are wound in the opposite directions on the adjacent teeth, it is considered that the tension on the link portion H23 weakens, which may cause the loosening of the conductor wire. Additionally, when the loosening of the conductor wire occurs at the link portion H23 of the second phase winding C2, there is also a concern that it may affect the first phase winding C1 (the post-wound winding). In this regard, since the link portion H23 of the second phase winding C2 is guided by the rising portions 63b of the electrical insulation members 63, it is possible to limit the loosening of the link portion H23, thereby enabling the proper winding of each phase winding.

The lead-out portions H11, H12, H21, H22 (the conductor wire end portions at the winding start side and the winding terminal side) of the first phase winding C1 and the second phase winding C2 are held by the grooves 65a, 65b of the electrical insulation members 63. This allows for the proper positioning of the conductor wire end portions of each phase winding C1, C2, making it easier to connect to, for example, the busbar. Additionally, it is expected to have the effect of limiting the loosening of the conductor wire during the winding work of each phase winding.

The stator core 31 is formed by the plurality of segmented cores 61, and each segmented core 61 is provided with the holding portion (the groove 65a, 65b) to hold the conductor wire end portion of the corresponding phase winding C1, C2. In this case, with the structure where the corresponding winding segment is wound around the tooth 34 of each segmented core 61, it is possible to optimally hold the conductor wire end portion pulled out from the winding segment.

In the case where the number of turns of the winding segments on each of the two end teeth 34 (the first and third teeth) among the three teeth 34 consecutively arranged in the circumferential direction is Na, and the number of turns of each of the winding segments on the center tooth 34 (the second tooth) is Nb, and the relationship between these numbers of turns is Na/2 < Nb, the amount of conductor wires on the center tooth 34, i.e., the common tooth, is increased compared to the other teeth. Therefore, at the time of winding the conductor wires around the common tooth, there is a concern that the winding irregularities may occur. In this regard, by defining the lead-out positions of the conductor wire end portions (the lead-out portions H11, H12, H21, H22) of each phase winding, it is possible to limit the inconvenience caused by the winding irregularities of the conductor wires.

Additionally, by guiding the link portion H23 of the second phase winding C2 to the rising portion 63b of the electrical insulation member 63 and holding the conductor wire end portion by the groove 65a of the electrical insulation member 63, it is expected to limit the inconvenience caused by the winding irregularities of the conductor wires.

In each phase winding C1, C2 wound on the first to third teeth, which are consecutively arranged in the circumferential direction, each of the conductor wire end portions is pulled out from the proximal end portion of the corresponding tooth 34. In other words, the conductor wire end portion is pulled out from the predetermined position relative to the corresponding tooth 34. In this case, it is possible to easily and appropriately connect the conductor wire end portions of each phase winding C1, C2 to the busbar module 70 provided at the one axial end of the stator core 31.

All of the eighteen teeth 34 of the stator core 31 are divided into the six tooth groups G1-G6, and the corresponding two phase windings C1, C2 are wound on each of these tooth groups G1-G6, while the busbar module 70 shaped in the circular ring form is assembled to the stator core 31. This allows for the proper winding of the stator windings 32 on all the teeth, and it also enables the easy and appropriate assembly of the busbar module 70 to the winding segments of each tooth group G1-G6.

### (Second Embodiment)

Hereafter, the second embodiment will be described, focusing on the differences from the first embodiment. In the present embodiment, the winding configurations of the first phase winding C1 and the second phase winding C2 for each tooth group G, which consists of the three teeth 34 consecutively arranged in the circumferential direction, are different from those of the first embodiment described above. The specific structure thereof will be described below.

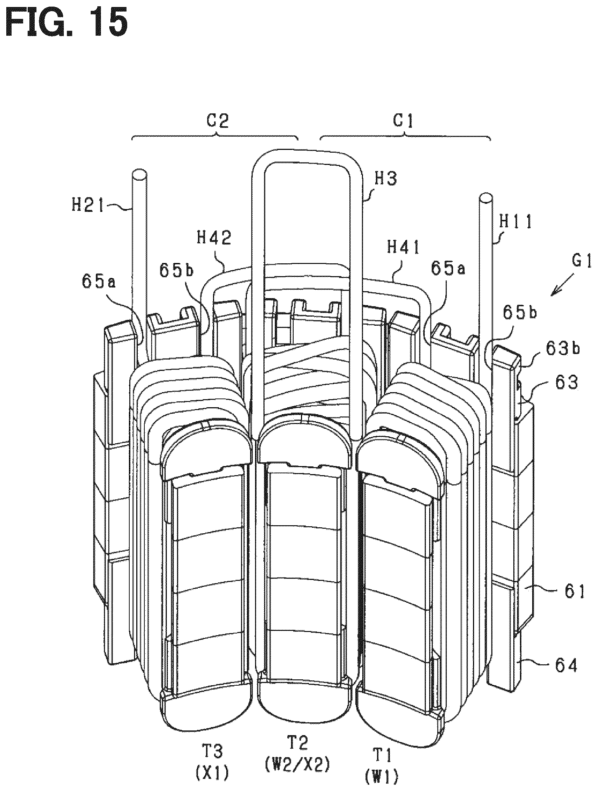

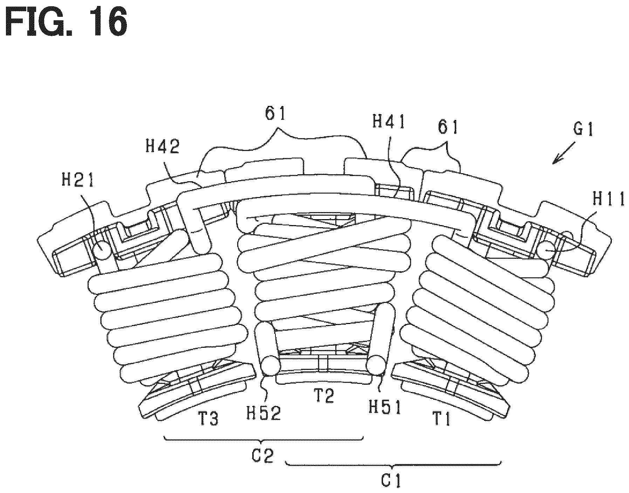

FIG. 15 is a perspective view showing the state where the winding segments are wound on the tooth group G1. FIG. 16 is a plan view of the tooth group G1 viewed in the axial direction. In the present embodiment, during the winding process, the two phase windings C1, C2, which are different from each other, are continuously wound. FIG. 15 shows the state where the two phase windings C1, C2 are connected by an intermediate portion H3. In the present embodiment, as in the first embodiment, the second phase winding C2 is the pre-wound winding, and the first phase winding C1 is the post-wound winding.

In the structure of FIG. 15, during the winding process of the conductor wire, the conductor wire corresponding to the second phase winding C2 (the pre-wound winding) is wound around in the order of the tooth T3 and then the tooth T2. Subsequently, the conductor wire corresponding to the first phase winding C1 (the post-wound winding) is wound around in the order of the tooth T2 and then the tooth T1. In the winding section corresponding to C1, a portion between the tooth T1 and the tooth T2 forms a link portion H41. In the winding section corresponding to C2, a portion between the tooth T2 and the tooth T3 forms a link portion H42.

In this case, after the winding segment X1 is wound around the tooth T3 with the number of turns Na, the winding segment X2 is wound around the tooth T2 with the number of turns Nb via the link portion H42 interposed between the winding segment X1 and the winding segment X2. Additionally, after the intermediate portion H3 is extended in the axial direction, the winding segment W2 is wound around the tooth T2 with the number of turns Nb, and then the winding segment W1 is wound around the tooth T1 with the number of turns Na via the link portion H41 interposed between the winding segment W2 and the winding segment W1. In FIG. 15, the winding directions of the windings around the teeth T1, T3 are counterclockwise, and the winding direction of the winding around the tooth T2 is clockwise.

In the winding section corresponding to C1, it is preferable that the lead-out portion H11 and the link portion H41 are respectively inserted into the grooves 65a, 65b of the electrical insulation member 63. In the winding section corresponding to C2, it is preferable that the lead-out portion H21 and the link portion H42 are respectively inserted into the grooves 65a, 65b of the electrical insulation member 63 in the same manner.

FIG. 16 is a diagram showing a state where, after forming the windings as shown in FIG. 15, the intermediate portion H3 is cut to separate the first phase winding C1 and the second phase winding C2 from each other. In this case, by cutting the intermediate portion H3, lead-out portions H51, H52, which respectively serve as the conductor wire end portions of the phase windings C1, C2, are formed. In the structure of FIG. 16, the two lead-out portions H11, H21 are provided at the radially outer side (i.e., at the proximal end portions of the corresponding teeth), and the two lead-out portions H51, H52 are provided at the radially inner side (i.e., at the distal end portion of the corresponding tooth). Each of these lead-out portions is extended in the axial direction. In the busbar holder 72 of the busbar module 70, it is preferable that the through-holes 72c are respectively formed in alignment with the positions of the lead-out portions.

According to the present embodiment, it becomes possible to continuously wind the two phase windings C1, C2 on the three teeth in each tooth group, thereby improving the efficiency of the winding process. Additionally, by distributing the four lead-out portions H11, H21, H51, H52 into two groups, which respectively include corresponding two of the four lead-out portions H11, H21, H51, H52 and are arranged at the radially inner side and the radially outer side of the teeth, it is possible to increase the spacing between each adjacent two welding positions during the welding process with the busbars 73, 74 in the busbar module 70. This arrangement simplifies the welding process.

### (Other Embodiments)

The above embodiments may be modified, for example, as follows.

In the above embodiment, the second phase winding C2, which is the pre-wound winding, is wound such that the two winding segments of the second phase winding C2 are wound around in the order of the third tooth and then the second tooth. However, this configuration may be modified such that the two winding segments of the second phase winding C2 are wound around in the order of the second tooth and then the third tooth. Furthermore, in the above embodiment, the first phase winding C1, which is the post-wound winding, is wound such that the two winding segments of the first phase winding C1 are wound around in the order of the first tooth and then the second tooth. However, this configuration may be modified such that the two winding segments of the first phase winding C1 are wound around in the order of the second tooth and then the first tooth.

In the structure shown in (a) and (b) of FIG. 10, the one end portion and the other end portion of each phase winding C1, C2 may be pulled out from the distal end portion of each corresponding tooth 34, i.e., the side opposite to the back yoke of each corresponding tooth 34. In this case, it is preferable that the rising portion 63c (see (a) of FIG. 9), which is formed at the radially inner part of the electrical insulation member 63, serves as the tooth-to-tooth guide portion. In other words, it is preferable that the link portion H23 of the second phase winding C2 (the pre-wound winding), which spans between the adjacent teeth, is guided by the rising portion 63b of the electrical insulation member 63 to the outside (the radially inner side) of the rising portion 63b.

Alternatively, with respect to the two phase windings wound on the first to third teeth, which are consecutively arranged in the circumferential direction, one end portion of each phase winding may be pulled out from the proximal end portion (the back yoke side) of the corresponding tooth, and the other end portion of each phase winding may be pulled out from the distal end portion (opposite to the back yoke) of the corresponding tooth.

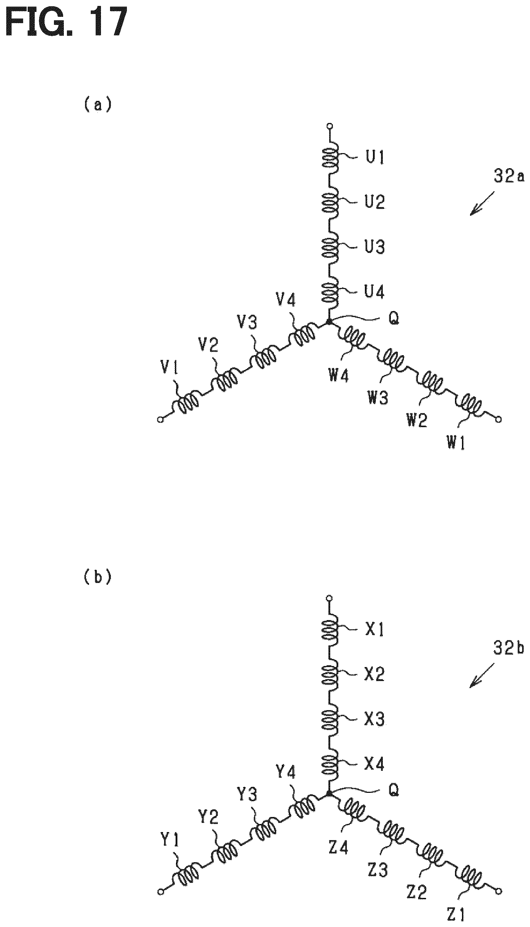

In the above embodiment, as shown in (a) of FIG. 7, the first set of stator windings 32a are configured such that the winding segments U1-U4, V1-V4, W1-W4 of each phase are divided into the two groups each including corresponding two of the winding segments U1-U4, V1-V4, W1-W4, and these winding segments U1-U4, V1-V4, W1-W4 are connected by the star connection. However, this structure may be modified. For example, as shown in (a) of FIG. 17, the first set of stator windings 32a may be configured such that the winding segments U1-U4, V1-V4, W1-W4 of each phase may be connected in series, and the three series-connected phase windings may be connected by a star connection. Furthermore, as shown in (b) of FIG. 17, the second set of stator windings 32b may be configured such that the winding segments X1-X4, Y1-Y4, Z1-Z4 of each phase may be connected in series, and the three series-connected phase windings may be connected by a star connection.

In each set of stator windings 32a, 32b, it is also possible to connect the phase windings using a delta connection (Δ connection) instead of the star connection (Y connection).

In the stator core 31, each segmented core 61 may have a plurality of teeth 34. For example, each segmented core 61 may have three teeth 34. Additionally, the stator core 31 may have a non-segmented structure, i.e., an integrally formed circular ring form that is not divided in the circumferential direction.

The number of teeth in the stator core 31 may be other than eighteen (18). However, in this case, the number of teeth is preferably 3×n, where n is an integer.

In the above embodiment, the stator windings 32 include the first set of stator windings 32a and the second set of stator windings 32b and thereby include the total of the six phase windings for the six phases. However, this can be modified such that the stator windings 32 include only three phase windings for three phases.

The rotary electric machine may be an outer rotor type instead of the inner rotor type.

Technical aspects, which are obtained based on the embodiments described above, will be recited below.

### (Configuration 1)

According to configuration 1, there is provided a stator (30) including:
a stator core (31) that includes:
   a back yoke (33) that is shaped in a circular ring form; and
   a plurality of teeth (34) that radially extend from the back yoke and are arranged at predetermined intervals in a circumferential direction; and
a plurality of stator windings (32) that include a plurality of phase windings, each of which is provided for a corresponding one of a plurality of phases, wherein:
   each of the plurality of phase windings has a plurality of winding segments each of which is wound around a corresponding one of the plurality of teeth using concentrated winding;
   among the plurality of teeth, a first tooth, a second tooth and a third tooth, which are consecutively arranged in the circumferential direction, are wound with a first phase winding (C1) and a second phase winding (C2) among the plurality of phase windings such that two of the plurality of winding segments of the first phase winding are wound continuously around the first tooth and the second tooth, respectively, and two of the plurality of winding segments of the second phase winding are wound continuously around the second tooth and the third tooth, respectively;
   one end portion of the first phase winding is pulled out from a proximal end portion or a distal end portion of the first tooth, and another end portion of the first phase winding is pulled out from a proximal end portion or a distal end portion of the second tooth; and
   one end portion of the second phase winding is pulled out from a proximal end portion or a distal end portion of the third tooth, and another end portion of the second phase winding is pulled out from the proximal end portion or the distal end portion of the second tooth.

### (Configuration 2)

According to configuration 2, there is provided the stator according to configuration 1, wherein:
among the first phase winding and the second phase winding, the second phase winding is a pre-wound winding, which is wound first at a time of winding the first phase winding and the second phase winding, and the first phase winding is a post-wound winding, which is wound later after the pre-wound winding; and
a tooth-to-tooth guide portion (63b) is placed at one of two opposite axial end portions of the stator core on a radially outer side or a radially inner side of a corresponding one or more of the plurality of teeth and is configured to guide a link portion (H23) of the pre-wound winding which spans between the second tooth and the third tooth.

### (Configuration 3)

According to configuration 3, there is provided the stator according to configuration 2, wherein:
at least one electrical insulation member (63) is placed on at least one of the two opposite axial end portions of the stator core and is configured to electrically insulate between one or more of the plurality of teeth and one or more of the plurality of winding segments of the plurality of phase windings; and
the at least one electrical insulation member has at least one rising portion (63b, 63c) that axially extends and is placed on at least one of a proximal end side and a distal end side of an adjacent one or more of the plurality of teeth adjacent to the at least one rising portion, wherein the at least one rising portion functions as the tooth-to-tooth guide portion, and the link portion spans on an opposite side of the at least one rising portion opposite to the adjacent one or more of the plurality of teeth.

### (Configuration 4)

According to configuration 4, there is provided the stator according to configuration 2 or 3, wherein the winding segment of the pre-wound winding wound around the second tooth and the winding segment of the pre-wound winding wound around the third tooth are coupled to one side part and another side part, respectively, of the link portion guided by the tooth-to-tooth guide portion, and a winding direction of a conductor wire segment of the winding segment of the pre-wound winding wound around the second tooth and a winding direction of a conductor wire segment of the winding segment of the pre-wound winding wound around the third tooth are opposite to each other.

### (Configuration 5)

According to configuration 5, there is provided the stator according to any one of configurations 1 to 4, wherein:
at least one electrical insulation member (63) is placed on at least one of two opposite axial end portions of the stator core and is configured to electrically insulate between one or more of the plurality of teeth and one or more of the plurality of winding segments of the plurality of phase windings; and
the at least one electrical insulation member is provided with at least one holding portion (65a, 65b) which is positioned on a proximal end side or a distal end side of an adjacent one or more of the plurality of teeth adjacent to the at least one holding portion, wherein the at least one holding portion holds:
   one conductor wire end portion of a conductor wire of the first phase winding which forms a winding start side of the first phase winding;
   another conductor wire end portion of the conductor wire of the first phase winding which forms a winding terminal side of the first phase winding;
   one conductor wire end portion of a conductor wire of the second phase winding which forms a winding start side of the second phase winding; and
   another conductor wire end portion of the conductor wire of the second phase winding which forms a winding terminal side of the second phase winding.

### (Configuration 6)

According to configuration 6, there is provided the stator according to configuration 5, wherein:
the stator core is divisible in the circumferential direction and is formed by a plurality of segmented cores (61) each of which has a corresponding one or more of the plurality of teeth; and
the at least one holding portion is a plurality of holding portions, and each of the plurality of segmented cores is provided with at least one of the plurality of holding portions.

### (Configuration 7)

According to configuration 7, there is provided the stator according to any one of configurations 1 to 6, wherein in a case where each of a number of turns of the winding segment wound around the first tooth and a number of turns of the winding segment wound around the third tooth is Na, and a number of turns of each of the winding segments wound around the second tooth is Nb, a relationship of Na/2 < Nb is satisfied.

### (Configuration 8)

According to configuration 8, there is provided the stator according to any one of configurations 1 to 7, comprising a busbar module (70) that includes:
a plurality of busbars (73, 74), wherein each of two conductor wire end portions of a conductor wire of each of the plurality of phase windings is electrically connected to a corresponding one of the plurality of busbars; and
a busbar holder (72) that holds the plurality of busbars, wherein:
   each of the two conductor wire end portions, which respectively form one end portion and another end portion of each of the plurality of phase windings, is connected to the corresponding one of the plurality of busbars in a state where each of the two conductor wire end portions of each of the plurality of phase windings is pulled out to extend in an axial direction and is inserted through a corresponding one of a plurality of insertion through-holes (72c) of the busbar holder.

### (Configuration 9)

According to configuration 9, there is provided the stator according to configuration 8, wherein:
a number of the plurality of teeth of the stator core is 3 x n, where n is an integer;
among the plurality of teeth, each set of three teeth arranged in the circumferential direction forms a corresponding one of a plurality of tooth groups (G1-G6);
the busbar module is shaped in a circular ring form which is coaxial with the stator core;
corresponding two of the plurality of phase windings, which respectively correspond to the first phase winding and the second phase winding, are wound at each of the plurality of tooth groups; and
the busbar module is installed on a side of one end of the stator core in the axial direction.

Although the present disclosure has been described with reference to the embodiments and the modifications, it is understood that the present disclosure is not limited to the embodiments and the modifications and structures described therein. The present disclosure also includes various variations and variations within the equivalent range. Also, various combinations and forms, as well as other combinations and forms that include only one element, more, or less, are within the scope and ideology of the present disclosure.

## Claims

1. A stator (30) comprising:
a stator core (31) that includes:
a back yoke (33) that is shaped in a circular ring form; and
a plurality of teeth (34) that radially extend from the back yoke and are arranged at predetermined intervals in a circumferential direction; and
a plurality of stator windings (32) that include a plurality of phase windings, each of which is provided for a corresponding one of a plurality of phases, wherein:
each of the plurality of phase windings has a plurality of winding segments each of which is wound around a corresponding one of the plurality of teeth using concentrated winding;
among the plurality of teeth, a first tooth, a second tooth and a third tooth, which are consecutively arranged in the circumferential direction, are wound with a first phase winding (C1) and a second phase winding (C2) among the plurality of phase windings such that two of the plurality of winding segments of the first phase winding are wound continuously around the first tooth and the second tooth, respectively, and two of the plurality of winding segments of the second phase winding are wound continuously around the second tooth and the third tooth, respectively;
one end portion of the first phase winding is pulled out from a proximal end portion or a distal end portion of the first tooth, and another end portion of the first phase winding is pulled out from a proximal end portion or a distal end portion of the second tooth; and
one end portion of the second phase winding is pulled out from a proximal end portion or a distal end portion of the third tooth, and another end portion of the second phase winding is pulled out from the proximal end portion or the distal end portion of the second tooth.

2. The stator according to claim 1, wherein:
among the first phase winding and the second phase winding, the second phase winding is a pre-wound winding, which is wound first at a time of winding the first phase winding and the second phase winding, and the first phase winding is a post-wound winding, which is wound later after the pre-wound winding; and
a tooth-to-tooth guide portion (63b) is placed at one of two opposite axial end portions of the stator core on a radially outer side or a radially inner side of a corresponding one or more of the plurality of teeth and is configured to guide a link portion (H23) of the pre-wound winding which spans between the second tooth and the third tooth.

3. The stator according to claim 2, wherein:
at least one electrical insulation member (63) is placed on at least one of the two opposite axial end portions of the stator core and is configured to electrically insulate between one or more of the plurality of teeth and one or more of the plurality of winding segments of the plurality of phase windings; and
the at least one electrical insulation member has at least one rising portion (63b, 63c) that axially extends and is placed on at least one of a proximal end side and a distal end side of an adjacent one or more of the plurality of teeth adjacent to the at least one rising portion, wherein the at least one rising portion functions as the tooth-to-tooth guide portion, and the link portion spans on an opposite side of the at least one rising portion opposite to the adjacent one or more of the plurality of teeth.

4. The stator according to claim 2, wherein the winding segment of the pre-wound winding wound around the second tooth and the winding segment of the pre-wound winding wound around the third tooth are coupled to one side part and another side part, respectively, of the link portion guided by the tooth-to-tooth guide portion, and a winding direction of a conductor wire segment of the winding segment of the pre-wound winding wound around the second tooth and a winding direction of a conductor wire segment of the winding segment of the pre-wound winding wound around the third tooth are opposite to each other.

5. The stator according to claim 1, wherein:
at least one electrical insulation member (63) is placed on at least one of two opposite axial end portions of the stator core and is configured to electrically insulate between one or more of the plurality of teeth and one or more of the plurality of winding segments of the plurality of phase windings; and
the at least one electrical insulation member is provided with at least one holding portion (65a, 65b) which is positioned on a proximal end side or a distal end side of an adjacent one or more of the plurality of teeth adjacent to the at least one holding portion, wherein the at least one holding portion holds:
one conductor wire end portion of a conductor wire of the first phase winding which forms a winding start side of the first phase winding;
another conductor wire end portion of the conductor wire of the first phase winding which forms a winding terminal side of the first phase winding;
one conductor wire end portion of a conductor wire of the second phase winding which forms a winding start side of the second phase winding; and
another conductor wire end portion of the conductor wire of the second phase winding which forms a winding terminal side of the second phase winding.

6. The stator according to claim 5, wherein:
the stator core is divisible in the circumferential direction and is formed by a plurality of segmented cores (61) each of which has a corresponding one or more of the plurality of teeth; and
the at least one holding portion is a plurality of holding portions, and each of the plurality of segmented cores is provided with at least one of the plurality of holding portions.

7. The stator according to any one of claims 1 to 6, wherein in a case where each of a number of turns of the winding segment wound around the first tooth and a number of turns of the winding segment wound around the third tooth is Na, and a number of turns of each of the winding segments wound around the second tooth is Nb, a relationship of Na/2 < Nb is satisfied.

8. The stator according to claim 1, comprising a busbar module (70) that includes:
a plurality of busbars (73, 74), wherein each of two conductor wire end portions of a conductor wire of each of the plurality of phase windings is electrically connected to a corresponding one of the plurality of busbars; and
a busbar holder (72) that holds the plurality of busbars, wherein:
each of the two conductor wire end portions, which respectively form one end portion and another end portion of each of the plurality of phase windings, is connected to the corresponding one of the plurality of busbars in a state where each of the two conductor wire end portions of each of the plurality of phase windings is pulled out to extend in an axial direction and is inserted through a corresponding one of a plurality of insertion through-holes (72c) of the busbar holder.

9. The stator according to claim 8, wherein:
a number of the plurality of teeth of the stator core is 3 x n, where n is an integer;
among the plurality of teeth, each set of three teeth arranged in the circumferential direction forms a corresponding one of a plurality of tooth groups (G1-G6);
the busbar module is shaped in a circular ring form which is coaxial with the stator core;
corresponding two of the plurality of phase windings, which respectively correspond to the first phase winding and the second phase winding, are wound at each of the plurality of tooth groups; and
the busbar module is installed on a side of one end of the stator core in the axial direction.
